# EUROPÄISCHE PATENTSCHRIFT

(11) **EP 3 238 871 B1**
(45) Veröffentlichungstag und Bekanntmachung des Hinweises auf die Patenterteilung: **06.06.2018**
(21) Anmeldenummer: 16305500.7
(22) Anmeldetag: 29.04.2016
(51) Int. Cl.: B23K 31/02, B21C 37/08, B23K 26/262, B23K 101/06, B23K 101/36

(54) **VERFAHREN ZUR HERSTELLUNG EINES ROHRES AUS METALL DURCH LASERSCHWEISSEN**
METHOD OF PRODUCING A TUBE MADE OF METAL USING LASER WELDING
PROCÉDÉ DE FABRICATION D'UN TUBE EN MÉTAL UILISANT LE SOUDAGE PAR LASER

(43) Veröffentlichungstag der Anmeldung: 01.11.2017
(73) Patentinhaber: Nexans, 92400 Courbevoie (FR)
(72) Erfinder: SOIKA, Rainer, 30559 Hannover (DE); THEUNE, Claus-Friedrich, 30974 Wennigsen (DE)
(74) Vertreter: Lenne, Laurence

(56) Entgegenhaltungen:
- US-A- 5 968 380
- US-A1- 2012 000 892
- US-A1- 2014 091 064
- US-B1- 7 094 988

## Beschreibung

Die Erfindung bezieht sich auf ein Verfahren zur Herstellung eines Rohres aus Metall, mit welchem ein Metallband mittels einer Abzugseinrichtung in seiner Längsrichtung bewegt und durch eine Formungseinrichtung geführt wird, in welcher dasselbe zu einem Schlitzrohr mit einem in Längsrichtung verlaufenden Schlitz geformt wird, an dem die beiden Kanten des Metallbands aneinander liegen, und mit welchem die Kanten des Metallbands zur Herstellung eines rundum geschlossenen Rohres durch eine mit einem Laser ausgerüstete Schweißeinrichtung miteinander verschweißt werden (siehe z.B. US2014/091064 A1). Rohre aus Metall können zum Fortleiten von flüssigen oder gasförmigen Medien dienen. Sie können auch als elektrische Leiter eingesetzt werden, beispielsweise in koaxialen Hochfrequenzkabeln. Ein weiteres Einsatzgebiet sind elektrische und/oder optische Kabel, bei denen ein Rohr aus Metall als Schutz für eine umschlossene Kabelseele dienen kann. In allen möglichen Ausführungsformen können die Rohre als Glattrohre ausgeführt sein. Sie können aber auch zur Verbesserung ihrer Biegbarkeit quer zu ihrer Längsrichtung gewellt sein, und zwar entweder wendelförmig oder ringförmig.

In der DE 44 34 134 A1 ist ein Verfahren beschrieben, mit dem ein Rohr aus einem Metallband hergestellt wird, das mittels einer Abzugseinrichtung kontinuierlich von einer Spule abgezogen und einer Formungseinrichtung zugeführt wird. Das Metallband wird in der Formungseinrichtung zu einem Schlitzrohr geformt, das weiter kontinuierlich in seiner Längsrichtung bewegt wird und dessen Seitenkanten an einem in Längsrichtung verlaufenden Schlitz aneinander liegen. Die Seitenkanten werden bei diesem Verfahren unter Einsatz eines Lasers bzw. einer Laserschweißeinrichtung miteinander verschweißt. Dabei wird das Material des Metallbandes an beiden Seitenkanten aufgeschmolzen. Die Seitenkanten werden mit Werkzeugen gegeneinander gedrückt, so daß sie nach Abkühlung durch eine Schweißnaht fest miteinander verbunden sind. Das danach rundum geschlossene Rohr kann auf eine Spule aufgewickelt oder einer Weiterbearbeitung zugeführt werden. Ein für das Verschweißen der Seitenkanten des Metallbands eingesetzter Laser benötigt nach seinem Anschalten an eine elektrische Stromquelle beispielsweise eine Minute bis drei Minuten oder auch länger, bis er seine für eine wirksame Verschweißung der Seitenkanten des Metallbands erforderliche Schweißleistung erreicht hat. Das Metallband wird materialabhängig beispielsweise mit einer Geschwindigkeit von 2 m/min von der Spule abgezogen und durch die Formungseinrichtung bewegt. Der Schlitz zwischen den Seitenkanten des kontinuierlich weiterbewegten Metallbands wird während des Hochfahrens des Lasers auf seine Schweißleistung gar nicht oder nur unvollkommen verschweißt. Die entsprechende Länge des dabei erzeugten Rohrs ist unbrauchbar. Sie fällt als Schrott an.

Der Erfindung liegt die Aufgabe zugrunde, das eingangs beschriebene Verfahren so zu gestalten, dass die Länge an durch mangelhafte Verschweißung unbrauchbarem Rohr deutlich verringert werden kann. Ein Verfahren zur Herstellung eines Rohres aus Metall gemäß der Erfindung ist im Anspruch 1 definiert. Bei Einsatz dieses Verfahrens wird der Schlitz zwischen den beiden Kanten des Metallbands mit einer Schweißnaht verschlossen, sobald das Material an den Kanten des Metallbands durch die Vorbehandlung durch den Laser in einen Zustand versetzt ist, in welchem die der Schweißleistung des Lasers entsprechende Laserenergie in die zu verschweißenden Kanten eingekoppelt werden kann. Die Schweißnaht wird dann sofort voll wirksam erzeugt, wenn der Laser auf seine Schweißleistung eingestellt ist und gleichzeitig das Schlitzrohr mittels der Abzugseinrichtung bewegt wird. Da das Material der Seitenkanten durch den Laser gezielt vorbehandelt und dabei beispielsweise auf eine vorgegebene Starttemperatur vorgewärmt ist, wird die Laserleistung vollständig in den Schweißbereich eingekoppelt, so dass das Material der Kanten des Metallbands direkt aufgeschmolzen wird. Die nicht brauchbare Länge eines nur unvollkommen verschweißten Schlitzrohrs kann dadurch auf ein Minimum reduziert werden.

Der Laser kann während der Vorbehandlung der Kanten des Metallbands bzw. des Schlitzrohrs auf eine gegenüber seiner Schweißleistung kleinere Leistung eingestellt werden. Diese verminderte Leistung des Lasers kann beispielsweise zu einer Erwärmung der Kanten des Metallbands bzw. einer Änderung der Struktur der Oberfläche derselben benutzt werden.

Ein gleiches Ergebnis kann erzielt werden, wenn der Laser auf seine Schweißleistung oder zumindest annähernd auf seine Schweißleistung eingestellt wird, die dabei abgestrahlte Energie den Kanten des Metallbands aber nur pulsweise zugeführt wird.

Beide Varianten zur Einstellung der Laserleistung können auch dann eingesetzt werden, wenn die laufende Fertigung des Rohres mit Stillsetzung der Abzugseinrichtung unterbrochen wird. Das kann beispielsweise dann erforderlich sein, wenn an das Metallband eine weitere Länge Metallband angeschweißt werden soll, um ein Rohr großer Länge herstellen zu können. Der Laser wird dann mit Vorteil in einen der beschriebenen Vorbehandlungszustände versetzt. Seine Schweißleistung wird dann wieder eingestellt, wenn das Metallband verlängert ist und wenn gleichzeitig die Abzugseinrichtung wieder eingeschaltet wird.

Die Temperatur im Schweißbereich wird während der Durchführung des Verfahrens mit Vorteil mittels eines Temperatursensors gemessen, bei dem es sich beispielsweise um einen Infrarot-Temperatursensor handeln kann. Dessen Meßwerte können einem Regler aufgegeben werden, durch welchen die Arbeitsweise des Lasers nach Maßgabe von vorgegebenen Sollwerten geregelt werden kann.

Das Verfahren nach der Erfindung wird anhand der Zeichnung als Ausführungsbeispiel erläutert.

Es zeigen:
Fig. 1 schematisch eine Anlage zur Durchführung des Verfahrens nach der Erfindung.
Fig. 2 eine Ansicht von Fig. 1 entsprechend dem Pfeil P1 im Ausschnitt in vergrößerter Darstellung.
Fig. 3 eine Ansicht von Fig. 1 entsprechend dem Pfeil P2 ebenfalls im Ausschnitt und in vergrößertet Darstellung.

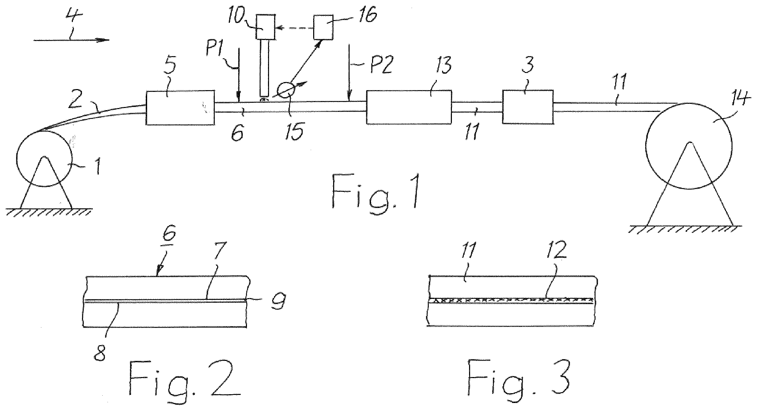

Mit 1 ist eine Spule bezeichnet, auf welcher ein Metallband 2 aufgewickelt ist, das beispielsweise aus Edelstahl oder Kupfer besteht. Das Metallband 2 wird mittels einer Abzugseinrichtung 3 von der Spule 1 abgezogen und in Richtung des Pfeiles 4 durch Anordnungen bzw. Geräte der in Fig. 1 dargestellten Anlage bewegt.

Eines der Geräte ist eine Formungseinrichtung 5, in welcher das Metallband 2 zu einem Schlitzrohr 6 geformt wird. Im Schlitzrohr 6 liegen die beiden Längskanten 7 und 8 des Metallbandes 2 entsprechend Fig. 2 an einem in Längsrichtung verlaufenden Schlitz 9 aneinander. Ein weiteres Gerät ist eine Laserschweißeinrichtung bzw. ein Laser 10, an welchem das Schlitzrohr 6 bei Durchführung des Verfahrens kontinuierlich in Richtung des Pfeiles 4 vorbeigeführt wird. Der Laser 10 verschweißt die Kanten 7 und 8 des Metallbands 2 miteinander, so daß sich ein Rohr 11 mit einer durchgehenden Schweißnaht 12 gemäß Fig. 3 ergibt. Mögliche weitere Geräte der Anlage, wie beispielsweise ein Werkzeug zum Zusammendrücken der Kanten 7 und 8, eine Kühleinrichtung und eine Einrichtung zum Wellen des Rohres 11, sind durch ein Kästchen 13 angedeutet. Das fertige Rohr 11 kann auf eine Spule 14 aufgewickelt oder einer weiteren Verarbeitung bzw. Bearbeitung zugeführt werden.

Das Verfahren nach der Erfindung wird beispielsweise wie folgt durchgeführt:
Das Metallband 2 wird mittels eines Abzugs von der Spule 1 in Richtung des Pfeiles 4 abgezogen und durch die Formungseinrichtung 5 hindurchgezogen. Es wird in der Formungseinrichtung 5 zum Schlitzrohr 6 geformt, das beispielsweise bis zu einer Abzugseinrichtung 3 weiterbewegt wird, welche für das Ziehen eines Rohres geeignet bzw. ausgebildet ist. Das Metallband 2 bzw. das daraus bereits geformte Schlitzrohr 6 wird dann durch Stillsetzen des Abzugs angehalten.

Der Schlitz 9 des Schlitzrohrs 6 liegt danach im Bereich des Lasers 10. Der Laser 10 kann dann an eine Stromquelle angeschlossen und bis zum Erreichen einer, einer gewünschten Leistung entsprechenden Temperatur, hochgefahren werden. Das kann aber auch vor dem Beginn der Bewegung des Metallbands 2 oder auch während der Bewegung desselben vorgenommen werden.

Die Kanten 7 und 8 des Metallbands 2 werden dann durch den Laser 10 vorbehandelt. Dabei wird das Material des Metallbands 2 im Bereich der Kanten 7 und 8 beispielsweise erwärmt oder strukturiert, so dass die vom Laser 10 bei seiner Schweißtemperatur erzeugte Energie ohne Hindernisse in dasselbe eingekoppelt werden kann. Dabei kann der Laser 10 beispielsweise auf eine gegenüber seiner Schweißtemperatur niedrigere Temperatur eingestellt werden. Er kann aber auch mit pulsförmigem Betrieb eingesetzt werden.

Nach ausreichender Vorbehandlung der Kanten 7 und 8 des Metallbands 2 wird der Laser 10 auf seine Schweißleistung als Dauerbetrieb eingestellt. Dadurch wird das Material an den Kanten 7 und 8 des Schlitzrohrs 6 geschmolzen. Das Schlitzrohr 6 wird dann durch Einschalten der Abzugseinrichtung 3 kontinuierlich in Richtung des Pfeiles 4 bewegt. Es entsteht dadurch das durch die Schweißnaht 12 rundum geschlossene Rohr 11.

Das Verfahren kann analog zu der beschriebenen Arbeitsweise auch dann eingesetzt werden, wenn die Fertigung unterbrochen wird, um beispielsweise eine weitere Länge Metallband an das Metallband 2 anzuschweißen, die zur Herstellung eines Rohres 11 mit großer Länge benötigt wird. Der Laser 10 wird dann in seinen der Vorbehandlung des Metallbands 2 entsprechenden Betrieb eingestellt und die Abzugseinrichtung 3 wird angehalten. Danach wird die kontinuierliche Fertigung so wie beschrieben wieder aufgenommen.

Zum Einhalten der im Vorangehenden beschriebenen Parameter, insbesondere der unterschiedlichen Temperaturen, wird mit Vorteil im Schweißbereich ein Temperatursensor 15 angeordnet, dessen Meßwerte ausgewertet und dazu einer Auswertung bzw. einem Regler 16 aufgegeben werden. Bei dem Temperatursensor 15 kann es sich beispielsweise um einen Infrarot-Temperatursensor handeln. Der Regler 16 regelt die Arbeitsweise des Lasers 10 nach Maßgabe von vorgebbaren Sollwerten.

## Patentansprüche

1. Verfahren zur Herstellung eines Rohres aus Metall, mit welchem ein Metallband mittels einer Abzugseinrichtung in seiner Längsrichtung bewegt und durch eine Formungseinrichtung geführt wird, in welcher dasselbe zu einem Schlitzrohr mit einem in Längsrichtung verlaufenden Schlitz geformt wird, an dem die beiden Kanten des Metallbands aneinander liegen, und mit welchem die Kanten des Metallbands zur Herstellung eines rundum geschlossenen Rohres durch eine mit einem Laser ausgerüstete Schweißeinrichtung miteinander verschweißt werden, **dadurch gekennzeichnet,**
- **dass** das Schlitzrohr (6) nach dem Austritt aus der Formungseinrichtung (5) zunächst bis in den Bereich des Lasers (10) bewegt und dann angehalten wird,
- **dass** daraufhin die Bereiche der miteinander zu verschweißenden Kanten (7,8) des Schlitzrohrs (6) durch den Laser (10) vorbehandelt werden,
- **dass** danach die Leistung des Lasers (10) auf seine der Schweißtemperatur entsprechende Schweißleistung eingestellt wird und
- **dass** gleichzeitig das Schlitzrohr (6) durch Einschalten der Abzugseinrichtung (3) in seiner Längsrichtung bewegt wird.

2. Verfahren nach Anspruch 1, **dadurch gekennzeichnet, dass** der Laser (10) während der Vorbehandlung der Kanten (7,8) des Schlitzrohrs (6) auf eine gegenüber der der Schweißtemperatur entsprechenden Schweißleistung verminderte Leistung eingestellt wird.

3. Verfahren nach Anspruch 1, **dadurch gekennzeichnet, dass** der Laser (10) während der Vorbehandlung des Schlitzrohrs (6) Pulse abgibt.

4. Verfahren nach einem der Ansprüche 1 bis 3, **dadurch gekennzeichnet, dass** die Temperatur im Schweißbereich mittels eines Temperatursensors (15) gemessen wird, dessen Meßwerte einer Auswertung bzw. einem Regler (16) aufgegeben werden.

## Claims

1. A method for the production of a tube made from metal, with which a metal band is moved by means of a removal device in its longitudinal direction and is guided by a shaping means, in which the same is formed into a slit tube with a slit running in the longitudinal direction, on which the two edges of the metal band abut one another, and with which the edges of the metal band are welded with each other in order to produce a tube closed all around by a welding apparatus equipped with a laser,
**characterized in**
- **that** the slit tube (6) after exiting from the shaping device (5) initially moves up to the area of the laser (10) and is then stopped,
- **that** subsequently the areas of the edges (7, 8) of the slit tube (6) to be welded together are pretreated by the laser (10),
- **that** then the power of the laser (10) is set to its welding power corresponding to the welding temperature and
- **that** at the same time the slit tube (6) is moved in its longitudinal direction by turning on the removal device (3).

2. A method according to Claim 1, **characterized in that** the laser (10) is set during the pretreatment of the edges (7, 8) of the slit tube (6) to a power reduced relative to the welding power corresponding to the welding temperature.

3. A method according to Claim 1, **characterized in that** the laser (10) emits pulses during the pretreatment of the slit tube (6).

4. A method according to any one of Claims 1 to 3, **characterized in that** the temperature in the welding area is measured by means of a temperature sensor (15), the measured values of which are fed to an evaluation or a controller (16).

## Revendications

1. Procédé de fabrication d'un tube en métal, avec lequel une bande métallique se déplace au moyen d'un dispositif de traction dans sa direction longitudinale et est guidée par un dispositif de formage, dans lequel elle est formée afin d'obtenir un tube fendu avec une fente s'étendant dans la direction longitudinale, au niveau de laquelle les deux arêtes de la bande métallique s'appuient l'une contre l'autre, et avec laquelle les arêtes de la bande métallique sont soudées entre elles par un dispositif de soudure équipé d'un laser pour la fabrication d'un tube fermé de tous les côtés,
**caractérisé en ce que**
- le tube fendu (6) se déplace, après la sortie hors du dispositif de formage (5), d'abord jusqu'au niveau du laser (10) puis est arrêté,
- les parties des arêtes (7, 8) à souder entre elles du tube fendu (6) sont ensuite pré-traitées,
- la puissance du laser (10) est ensuite réglée à sa puissance de soudage correspondant à la température de soudage et
- simultanément, le tube fendu (6) est déplacé dans sa direction longitudinale par mise en marche du dispositif de traction (3).

2. Procédé selon la revendication 1, **caractérisé en ce que** le laser (10) est réglé pendant le pré-traitement des arêtes (7, 8) du tube fendu (6) à une puissance réduite par rapport à la puissance de soudage correspondant à la température de soudage.

3. Procédé selon la revendication 1, **caractérisé en ce que** le laser (10) émet des impulsions pendant le pré-traitement du tube fendu (6).

4. Procédé selon l'une des revendications 1 à 3, **caractérisé en ce que** la température est mesure dans la zone de soudage au moyen d'un capteur de température (15) dont les valeurs de mesure sont soumises à une analyse ou sont transmises à un régulateur (16).
